# FASCICULE DE BREVET EUROPEEN

(11) **EP 1 093 839 B1**
(45) Date de publication et mention de la délivrance du brevet: **13.08.2003**
(21) Numéro de dépôt: 00402857.7
(22) Date de dépôt: 16.10.2000
(51) Int. Cl.: B01D 27/08, F01M 11/03, B01D 29/11, B01D 29/96, B01D 35/30

(54) **Boîtier de filtre à couvercle vissable encliquetable**
Filtergehäuse das einen Schraubdeckel mit Schnappverbindung aufweist
Filter housing having a snap-on filter lid

(30) Priorité: 18.10.1999 FR 9912952
(43) Date de publication de la demande: 25.04.2001
(73) Titulaire: FILTRAUTO, 78180 Montigny le Bretonneux (FR)
(72) Inventeur: Petra, Jean-Marc, 91400 Orsay (FR); Pigeau, Jean-Michel, 91220 Bretigny sur Orge (FR); Capdeville, Georges, 75020 Paris (FR); Le Petit, Frédéric, 78160 Marly le Roi (FR)
(74) Mandataire: Burbaud, Eric

(56) Documents cités:
- EP-A- 0 528 528
- FR-A- 2 776 938
- FR-A- 2 784 598
- GB-A- 2 138 411
- US-A- 4 331 247
- US-A- 5 437 387

## Description

La présente invention est relative à un boîtier de filtre à liquide pour moteur à combustion interne, le liquide filtré étant de préférence de l'huile.

Les boîtiers de filtre à liquide habituellement rencontrés comprennent :
- une embase dotée d'un fond à partir duquel s'étend une paroi annulaire elle-même munie d'une extrémité libre,
- un capot doté d'une tête à partir de laquelle s'étend une paroi annulaire qui possède une extrémité libre et qui est complémentaire de la paroi annulaire de l'embase pour délimiter avec celle-ci un volume intérieur creux qui est destiné à recevoir un élément filtrant interposé entre une entrée et une sortie de liquide, le capot étant fixé de façon amovible sur l'embase par vissage pour permettre un montage et un démontage par rotation dudit capot autour d'un axe de rotation, l'enlèvement du capot permettant le remplacement de l'élément filtrant,
- l'une des parois annulaires de l'embase et du capot étant appelée première paroi et l'autre des parois annulaires étant appelée deuxième paroi, la première paroi possédant une collerette radiale et l'extrémité libre de la deuxième paroi se terminant par une face plane, la collerette étant, après vissage du capot sur l'embase, en butée sur la face plane lorsque le capot occupe une position relative prédéterminée par rapport à l'embase. Un tel boitier de filtre est décrit dans le brevet FR 2776 938 A

Lorsqu'un opérateur veut remplacer l'élément filtrant contenu dans le boîtier de filtre, il doit dévisser le capot pour retirer l'ancien élément filtrant, replacer un nouvel élément filtrant, puis revisser le capot sur l'embase pour fermer à nouveau le boîtier. Lors de ce vissage, il est nécessaire d'exercer un couple de serrage prédéterminé sur le capot afin que le boîtier de filtre soit fermé de manière sûre.

Pour cela, l'opérateur doit utiliser une clé dynamométrique pour vérifier qu'il exerce le couple de serrage approprié. Or, l'accessibilité du boîtier de filtre à l'intérieur du moteur d'un véhicule automobile à bord duquel le boîtier est placé, ne permet pas toujours de manipuler facilement une telle clé dynamométrique. De plus, l'opérateur doit posséder l'outillage nécessaire.

Le brevet US 5437387 A décrit un boitier destiné à recevoir des produits dangeureux. Il comprend un capot et une embase munis de moyens de clipsage sur sa paroi annulaire.

La présente invention a pour but de remédier aux inconvénients précités en fournissant un boîtier de filtre à liquide possédant un capot pouvant être facilement vissé sans recourir à une clé dynamométrique tout en garantissant l'étanchéité et le non desserrage du capot par rapport à l'embase.

A cet effet, selon l'invention, un boîtier de filtre à liquide du type précité, est essentiellement caractérisé en ce que la face plane comprend un évidement et la première paroi comprend des moyens de clipsage qui s'emboîtent dans l'évidement lorsque la position prédéterminée du capot sur l'embase est atteinte, et en que
- les première et deuxième parois annulaires comportent des pas de vis complémentaires pour visser le capot sur l'embase, la position des moyens de clipsage étant repérée par rapport au pas de vis de la première paroi pour emboîter les moyens de clipsage dans l'évidement lorsque la position prédéterminée du capot est atteinte.

Le boîtier de filtre suivant l'invention peut éventuellement comporter en outre une ou plusieurs des caractéristiques suivantes :
- les moyens de clipsage comprennent une languette élastique dont une première extrémité est libre et est sollicitée élastiquement pour s'emboîter dans l'évidement ;
- la languette s'étend radialement par rapport à la première paroi et à l'extérieur du boîtier ;
- la languette possède un bord sensiblement perpendiculaire à la première extrémité et le long duquel la languette est venue de matière avec la première paroi ;
- la languette comprend une deuxième extrémité opposée à la première extrémité et qui est montée solidaire de la collerette, et la collerette comporte un logement sensiblement de forme en "U" débouchant en direction de la surface plane et qui possède deux pattes et une tête, la deuxième extrémité de la languette étant venue de matière avec la tête ;
- la languette est rapportée par clipsage sur la première paroi ;
- la languette s'étend sensiblement parallèlement à la collerette et est ménagée dans l'épaisseur de cette collerette ;
- l'extrémité libre de la languette est de forme longitudinale sensiblement de forme concave dont la concavité est tournée en direction opposée à l'extrémité de la première paroi ;
- la surface plane comprend un relief faisant saillie en direction de la collerette, le relief étant situé en amont de l'évidement par rapport au sens de déplacement de la languette lors du vissage du capot sur l'embase ; et
- la surface plane et la première paroi comprennent chacune une butée, les deux butées étant en contact dans la position prédéterminée du capot par rapport à l'embase.

Cinq modes de réalisation de l'invention vont maintenant être décrits en regard des dessins annexés, sur lesquels :
- la figure 1 est une vue en coupe longitudinale d'un boîtier de filtre à liquide suivant la présente invention ;
- la figure 2 est une vue en perspective du boîtier de la figure 1, comprenant des moyens de clipsage selon un premier mode de réalisation de l'invention ;
- la figure 3 est une vue agrandie de la partie du capot portant les moyens de clipsage de la figure 2 et du tronçon de l'embase muni de l'évidement ;
- la figure 4 est une vue de dessus de l'embase du boîtier de la figure 2 ;
- la figure 5 est une vue analogue à celle de la figure 3 selon un deuxième mode de réalisation des moyens de clipsage ;
- les figures 6 et 7 sont des vues agrandies des seuls moyens de clipsage selon des troisième et quatrième modes de réalisation de l'invention ;
- la figure 8 est une vue de coté du boîtier muni de moyens de clipsage selon un cinquième mode de réalisation de l'invention ; et
- la figure 9 est une vue agrandie des moyens de clipsage de la figure 8.

Sur les différentes figures, les mêmes références désignent des éléments identiques ou similaires.

Afin de faciliter la compréhension de la description qui suit, le filtre est décrit dans une position particulière, la position verticale, le capot étant dirigé vers le haut.

Toutefois, cette position n'est pas limitative, et le filtre pourrait éventuellement être utilisé dans une autre position.

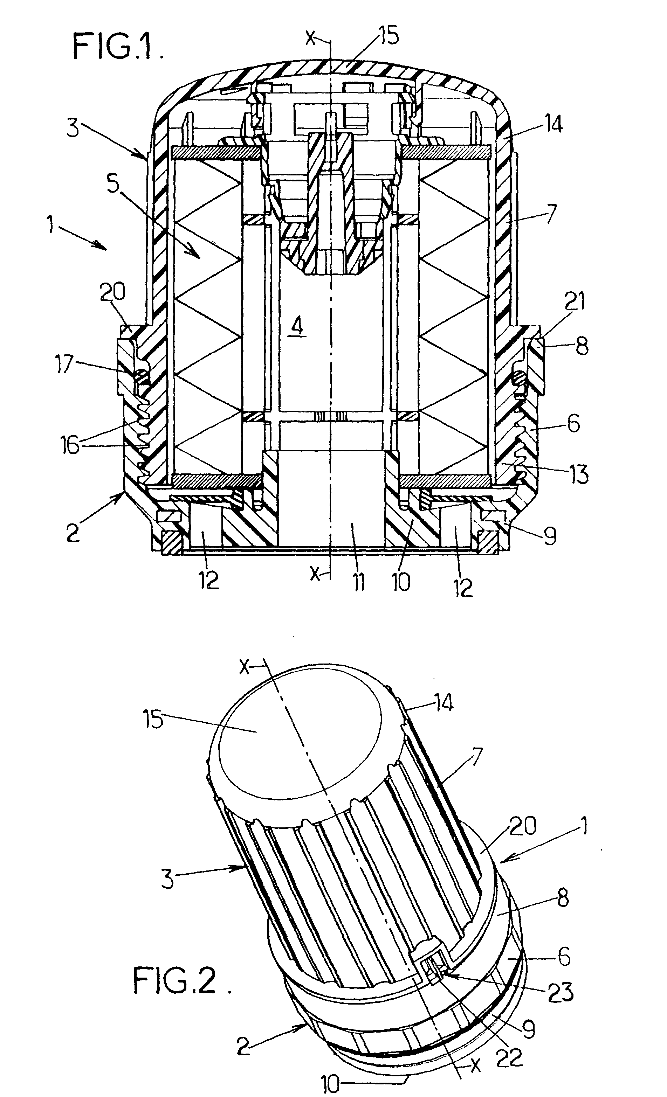

Le boîtier de filtre 1 représenté aux figures 1 et 2 se compose d'une embase 2 sur laquelle est monté un capot amovible 3 de manière à former un volume intérieur creux 4 destiné à recevoir un élément filtrant 5.

L'embase 2 et le capot amovible 3 comportent respectivement des parois latérales 6 et 7 qui présentent une forme cylindrique de révolution autour d'un axe commun X-X.

L'embase 2 s'étend entre une première extrémité libre ou extrémité supérieure 8 et une deuxième extrémité ou extrémité inférieure 9 qui est fermée par un fond 10. L'embase 2 présente ainsi une section transversale en forme de "U" droit et est destinée à être montée dans une position fixe sur une surface support d'un moteur de véhicule automobile (non représenté). Dans le fond 10 de l'embase 2 sont par ailleurs ménagées une entrée 11 de liquide à l'intérieur du boîtier et des sorties 12 de ce liquide hors du boîtier.

Le capot amovible 3 s'étend entre une première extrémité libre 13 ou extrémité inférieure et une deuxième extrémité 14 ou extrémité supérieure fermée par une tête bombée 15. Le capot amovible 3 présente ainsi une forme de "U" renversé sur l'embase fixe 2.

Le capot 3 est immobilisé sur l'embase 2 par vissage pour permettre un montage et un démontage rapides par rotation du capot 3. Dans l'exemple représenté, le capot 3 est vissé par son extrémité inférieure 13, sur l'extrémité supérieure 8 de la paroi latérale 6 de l'embase 2 grâce à deux pas de vis 16 ménagés dans chacune de ces extrémités.

L'embase 2 et le capot 3 sont moulés par injection d'une matière plastique, par exemple en polyamide 6-6. D'autres matériaux pourraient toutefois être envisagés sans pour autant sortir du cadre de l'invention.

L'étanchéité du vissage du capot 3 sur l'embase 2 est assurée par un joint torique 17 porté par la paroi annulaire 7 du capot 3 et est disposé au-dessus du pas de vis 16 porté par celle-ci.

L'ouverture de l'extrémité inférieure 13 du capot amovible 3 est suffisamment large pour permettre le remplacement de l'élément filtrant 5.

Par ailleurs, la paroi annulaire 7 du capot 3 possède une collerette radiale 20. Cette collerette fait saillie à partir de la paroi annulaire 7 en direction de l'extérieur du boîtier et est située à l'opposé du pas de vis 16 porté par cette paroi, par rapport au joint torique 17.

La partie terminale de l'extrémité 8 possède une surface plane 21 qui s'étend dans un plan perpendiculaire à l'axe X-X et est en forme d'anneau. Un évidement 22 est ménagé dans cette extrémité libre 8 et débouche sur la surface plane 21.

Après avoir changé l'élément filtrant 5, l'opérateur visse le capot 3 sur l'embase 2 jusqu'à ce que des moyens de clipsage 23 montés solidaires en rotation du capot 3 s'emboîtent dans l'évidement 22. La position angulaire relative des moyens de clipsage 23 par rapport au premier filet du pas de vis 16 porté par le capot 3, est adaptée pour qu'une position relative prédéterminée du capot 3 sur l'embase 2 soit atteinte lorsque les moyens de clipsage 23 coopèrent avec l'évidement 22. Cette position assure que les moyens d'étanchéité soient correctement mis en place.

Les moyens de clipsage 23 consistent, dans les cinq modes de réalisation, en une languette réalisée en un matériau à déformation élastique.

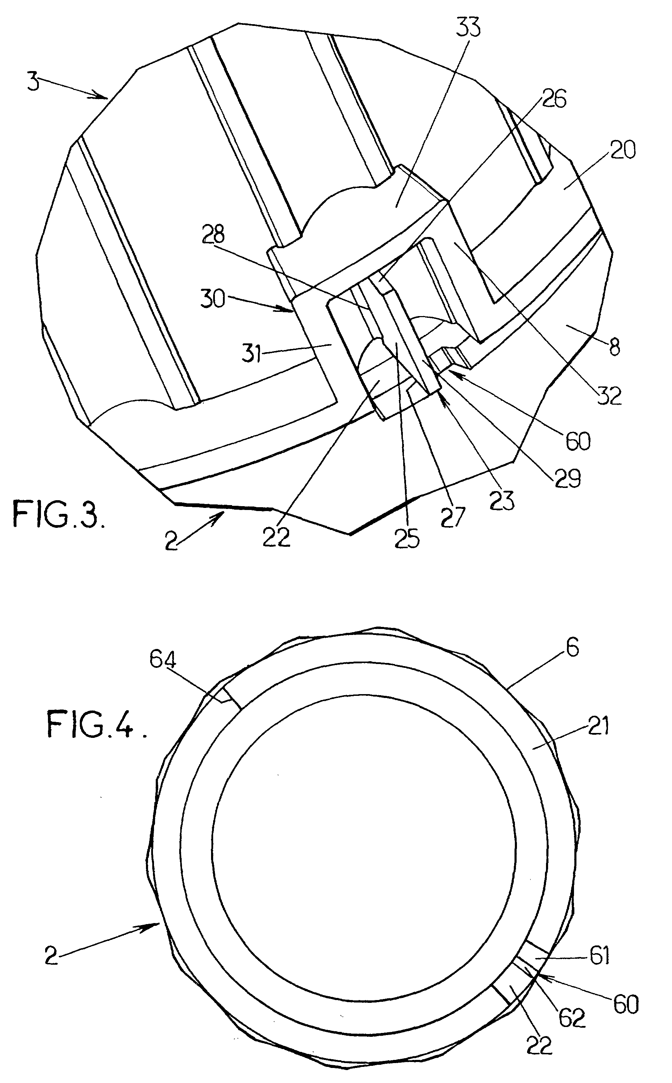

Dans le premier mode de réalisation (figures 2 et 3), la languette 25 est sensiblement de forme rectangulaire et possède une extrémité supérieure 26, une extrémité inférieure 27 ainsi que deux bords 28, 29 qui sont parallèles à l'axe X-X. La languette 25 s'étend radialement à l'extérieur du boîtier 1 et est venue de matière, le long du bord 28, avec la paroi latérale 7 du capot 3.

La languette 25 est située dans un logement 30 qui est ménagé sur la collerette 20. Ce logement est sensiblement de forme en "U" débouchante en direction de l'embase 2. Le logement 30 possède ainsi deux pattes 31,32 et une tête 33 qui relient les deux pattes. Celles-ci s'étendent parallèlement à l'axe X-X et de part et d'autre de la languette 25 de sorte que l'extrémité inférieure 27 de cette languette est libre de pénétrer dans l'évidement 22 de la surface plane 21 de l'embase 2. Un certain jeu est ménagé entre l'extrémité supérieure 26 de la languette et la tête 33 du logement. La languette 25 est flexible autour de son bord 28.

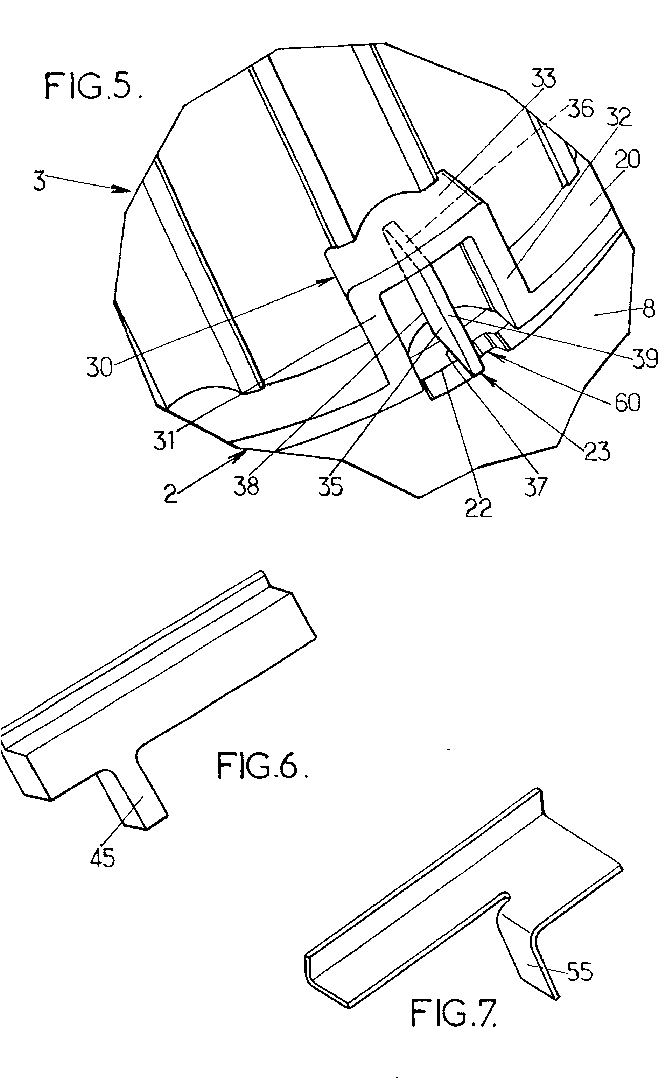

Dans le deuxième mode de réalisation représenté à la figure 5, la languette 35 est sensiblement de forme identique à celle de la languette 25 décrite ci-dessus de sorte qu'elle possède également une extrémité supérieure 36, une extrémité inférieure 37 ainsi que deux bords 38, 39. La languette est encore située dans le logement 30 et est venue de matière avec la tête 33 le long de son extrémité supérieure 36. La languette est flexible autour de l'extrémité supérieure 36.

Les languettes 45 et 55 des troisième et quatrième modes de réalisation (figures 6 et 7) diffèrent de la languette 35 en ce qu'elles sont non plus venues de matière avec le logement 30 mais réalisées séparément puis rapportées par clipsage sur le capot. La languette 45 est obtenue par moulage d'une matière plastique et la languette 55 est réalisée par découpe dans un tôle métallique.

Par ailleurs, l'embase 2 comporte un relief 60 (figure 4) qui, dans les quatre modes de réalisation précédemment décrits, fait saillie sur la surface plane 21 en direction du capot 3. Le relief 60 possède une rampe 61 qui se prolonge par une bossage 62 à tête plane, lui-même contiguë à l'évidement 22.

Afin d'éviter le frottement de la languette sur la surface plane 21, ladite surface 21 est légèrement en pente à partir d'un certain angle avant le relief 60, ledit angle dépendant du pas du vissage.

Lorsque la languette atteint le relief 60, elle est déformée par la rampe 61, puis revient à sa forme initiale en pénétrant dans l'évidement 22, après avoir dépassé le bossage 62. Cette déformation de la languette produit un "clic" avertissant l'opérateur que la languette est logée dans l'évidement et donc, que le capot est dans sa position repérée prédéterminée. L'opérateur, en entendant le clic, arrête le vissage du capot 3.

Pour empêcher un vissage du capot au-delà de la position prédéterminée, le capot et l'embase viennent an butée, ce qui bloque toute rotation supplémentaire et évite de détériorer les moyens d'étanchéité et de provoquer lors d'un nouveau changement de filtre, le dévissage de l'embase au lieu du capot. Dans une première variante, la collerette 20 vient en butée sur l'extrémité libre 8 de la paroi annulaire 6 de l'embase 2. Plus précisément, la collerette vient en butée sur la surface plane 21 qui se trouve dans la partie terminale de l'extrémité 8. Dans une deuxième variante, l'embase 2 comprend en outre un butée franche 64 située sur la surface plane 21, sensiblement diamétralement à l'opposé de l'évidement 22. Cette butée 64 est destinée, lors du vissage du capot 3 sur l'embase 2, à venir en appui contre une butée complémentaire (non représentée) de l'embase.

On comprend que le vissage du capot sur l'embase est obtenu sans utilisation d'outil spécifique.

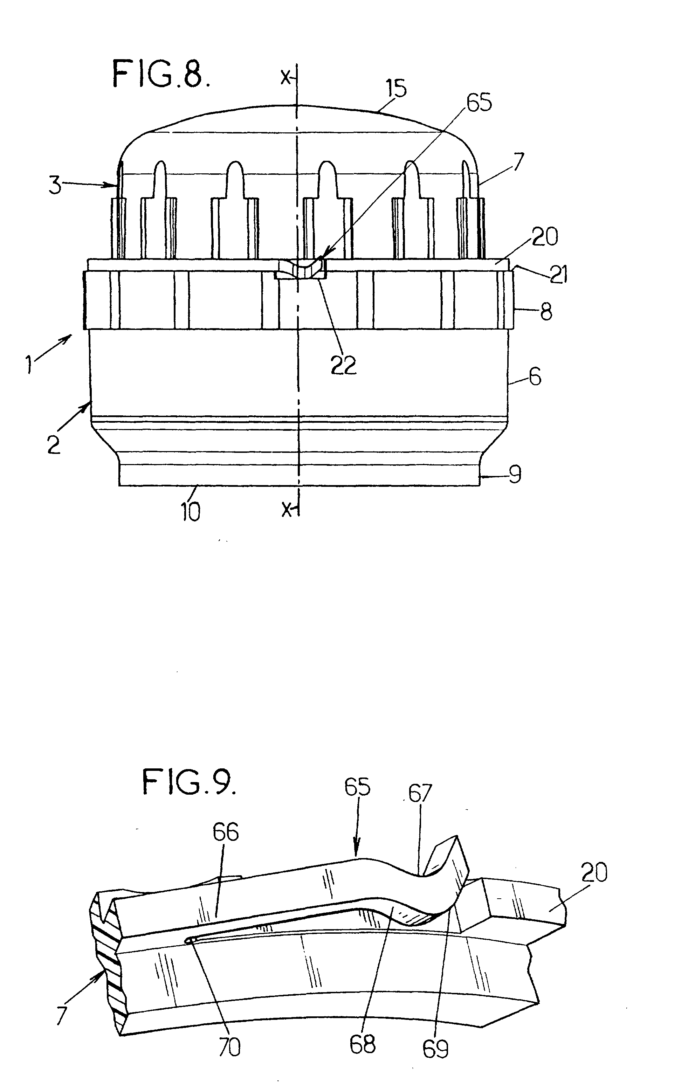

Dans le cinquième mode réalisation (figures 8 et 9), les moyens de clipsage 23 consistent en une languette 65 qui s'étend perpendiculairement à l'axe X-X. Cette languette est ménagée dans l'épaisseur de la collerette 20 et est également réalisée en matériau à déformation élastique.

La languette 65 s'étend entre une première extrémité 66 qui est venue de matière avec la collerette radiale 20 et une deuxième extrémité libre 67 qui possède une forme concave dont la concavité est tournée en direction opposée à l'extrémité supérieure 8 de l'embase 2. La languette 65 est déformable élastiquement dans un plan longitudinal par rapport au boîtier 1 de sorte que l'extrémité libre 67 tend à se déplacer vers un niveau plus haut que celui de l'extrémité fixe 66 pour s'engager ensuite dans l'évidement 22.

L'extrémité libre 67 possède deux branches courbes 68 et 69. La première branche 68 est reliée au reste de la languette 65 et la deuxième branche libre 69 est inclinée d'un certain angle par rapport à un plan radial. Cet angle est adapté pour que la branche libre 69 s'oppose au mouvement vers le haut de la languette 65 lorsque cette languette vient en butée contre l'une des parois latérales verticales de l'évidement 22, lors du dévissage du capot 3. Le couple de dévissage est ainsi supérieur au couple de serrage prédéterminé.

Lorsque l'opérateur veut dévisser le capot 3 hors de l'embase 2, il exerce un couple de dévissage. Lors de la rotation du capot 3, les formes de l'extrémité libre 67 de la languette 65 et de la paroi latérale de l'évidement 22 s'opposent dans un premier temps au désencliquetage de- la languette hors de l'évidement 22. Dans un deuxième temps, lorsque le couple de desserrage est suffisamment élevé, la languette sort de l'évidement et le dévissage est poursuivi.

Par ailleurs, pour éviter de trop fortes contraintes au niveau de la liaison de la languette 65 avec la collerette 20, le raccordement de l'extrémité fixe 66 de cette languette avec la collerette se fait selon un congé 70.

Bien évidement, on comprend que la languette peut non pas être portée par la paroi annulaire 7 du capot 3, mais par la paroi de l'embase 2. De même, l'évidement 22 peut être ménagé dans le capot 3.

## Revendications

1. Boîtier de filtre à liquide pour moteur à combustion interne comprenant :
- une embase (2) dotée d'un fond (10) à partir duquel s'étend une paroi annulaire (6) elle-même munie d'une extrémité libre (8),
- un capot (3) doté d'une tête (15) à partir de laquelle s'étend une paroi annulaire (7) qui possède une extrémité libre (13) et qui est complémentaire de la paroi annulaire (6) de l'embase (2) pour délimiter avec celle-ci un volume intérieur creux (4) qui est destiné à recevoir un élément filtrant (5) interposé entre une entrée (11) et une sortie de liquide (12), le capot (3) étant fixé de façon amovible sur l'embase (2) par vissage pour permettre un montage et un démontage par rotation dudit capot (3) autour d'un axe de rotation (X-X), l'enlèvement du capot (3) permettant le remplacement de l'élément filtrant (5),
- l'une (7) des parois annulaires (6,7) de l'embase (2) et du capot (3) étant appelée première paroi et l'autre (6) des parois annulaires (6,7) étant appelée deuxième paroi, les première (7) et deuxième (6) parois annulaires comportant des pas de vis complémentaires (16) pour visser le capot sur l'embase, la première paroi (7) possédant une collerette radiale (20) et l'extrémité libre (8) de la deuxième paroi (6) se terminant par une face plane (21), la collerette (20) étant, après vissage du capot (3) sur l'embase (2), en butée sur la face plane (21) lorsque le capot occupe une position relative prédéterminée par rapport à l'embase,
**caractérisé en ce que** la face plane (21) comprend un évidement (22) et la première paroi (7) comprend des moyens de clipsage (23) qui s'emboîtent dans l'évidement (22) lorsque la position prédéterminée du capot (3) sur l'embase (2) est atteinte, et **en ce que** la position des moyens de clipsage (23) est repérée par rapport au pas de vis (16) de la première paroi (7) pour emboîter les moyens de clipsage (23) dans l'évidement (22) lorsque la position prédéterminée du capot (3) est atteinte.

2. Boîtier de filtre à liquide selon la revendication 1, dans lequel les moyens de clipsage (23) comprennent une languette élastique (25;35;45;55;65) dont une première extrémité (27;37;67) est libre et est sollicitée élastiquement pour s'emboîter dans l'évidement (22).

3. Boîtier de filtre à liquide selon la revendication 2, dans lequel la languette (25;35;45;55) s'étend radialement par rapport à la première paroi (7) et à l'extérieur du boîtier (1).

4. Boîtier de filtre à liquide selon la revendication 3, dans lequel la languette (25) possède un bord (28) sensiblement perpendiculaire à la première extrémité (27) et le long duquel la languette (25) est venue de matière avec la première paroi (7).

5. Boîtier de filtre à liquide selon la revendication 3, dans lequel la languette (35) comprend une deuxième extrémité (36) opposée à la première extrémité (37) et qui est montée solidaire de la collerette (20), et la collerette (20) comporte un logement (30) sensiblement de forme en "U" débouchant en direction de la surface plane (21) et qui possède deux pattes (31,32) et une tête (33), la deuxième extrémité (36) de la languette (35) étant venue de matière avec la tête (33).

6. Boîtier de filtre à liquide selon la revendication 3, dans lequel la languette (45;55) est rapportée par clipsage sur la première paroi (7).

7. Boîtier de filtre à liquide selon la revendication 2, dans lequel la languette (65) s'étend sensiblement parallèlement à la collerette (20) et est ménagée dans l'épaisseur de cette collerette (20).

8. Boîtier de filtre à liquide selon la revendication 7, dans lequel l'extrémité libre (67) de la languette (65) est de forme longitudinale sensiblement de forme concave dont la concavité est tournée en direction opposée à l'extrémité (13) de la première paroi (7).

9. Boîtier de filtre à liquide selon l'une quelconque des revendications 2 à 8, dans lequel la surface plane (21) comprend un relief (60) faisant saillie en direction de la collerette (20), le relief (60) étant situé en amont de l'évidement (22) par rapport au sens de déplacement de la languette (25;35;45;55;65) lors du vissage du capot (3) sur l'embase (2).

10. Boîtier de filtre à liquide selon l'une quelconque des revendications 2 à 9, dans lequel la surface plane (21) et la première paroi (7) comprennent chacune une butée (64), les deux butées étant en contact dans la position prédéterminée du capot (3) par rapport à l'embase (2).

## Patentansprüche

1. Flüssigkeitsfiltergehäuse für einen Verbrennungsmotor, das aufweist:
- einen Sockel (2), der mit einem Boden (10) versehen ist, von dem sich eine ringförmige Wand (6) erstreckt, die mit einem freien Endabschnitt (8) ausgestattet ist,
- eine Kappe (3), die mit einem Kopfabschnitt (15) versehen ist, von dem sich eine ringförmige Wand (7) erstreckt, die einen freien Endabschnitt (13) besitzt und die zur ringförmigen Wand (6) des Sockels (2) komplementär ist, um mit dieser ein inneres Hohlvolumen (4) abzugrenzen, in dem ein Filterelement (5) aufnehmbar ist, das zwischen einen Eintritt (11) und einen Austritt (12) der Flüssigkeit zwischengefügt ist,
wobei die Kappe (3) durch Schraubverbindung abnehmbar an dem Sockel (2) befestigt ist, um eine Anbringen und ein Abnehmen durch Rotation der Kappe (3) um die Rotationsachse (X-X) zu gestatten, wobei das Entfernen der Kappe (3) das Ersetzen des Filterelements (5) gestattet,
-wobei eine (7) der ringförmigen Wände (6, 7) des Sockels (2) und der Kappe (3) als erste Wand bezeichnet wird und die andere (6)der ringförmigen Wände (6, 7) als zweite Wand bezeichnet wird, wobei die erste (7) und die zweite (6) ringförmige Wand komplementäre Schraubengänge (16) zum Schrauben der Kappe an den Sockel aufweisen, wobei die erste Wand (7) einen Radialbund (20) besitzt und der freie Endabschnitt (8) der zweiten Wand (6) in einer ebenen Fläche (21) endet, wobei der Bund (20) nach dem Schrauben der Kappe (3) an den Sockel (2) mit der ebenen Fläche (21) in Anschlag steht, wenn die Kappe eine bezüglich des Sockels vorbestimmte Relativposition einnimmt,
**dadurch gekennzeichnet, dass** die ebene Fläche (21) eine Aussparung (22) aufweist und dass die erste Wand (7) eine Klips-Befestigungseinrichtung (23) aufweist, die in die Aussparung (22) eingefügt ist, wenn die vorbestimmte Position der Kappe (3) auf dem Sockel (2) erreicht ist, und dass die Position der Klips-Befestigungseinrichtung (23) bezüglich des Schraubengangs (16) der ersten Wand (7) markiert ist, um die Klips-Befestigungseinrichtung (23) in die Aussparung (22) einzufügen, wenn die vorbestimmte Position der Kappe (3) erreicht ist.

2. Flüssigkeitsfiltergehäuse nach Anspruch 1, bei dem die Klips-Befestigungseinrichtung (23) eine elastische Lasche (25;35;45;55,65) aufweist, deren erster Endabschnitt (27;37;67) frei und elastisch beansprucht ist, um in die Aussparung (22) zu passen.

3. Flüssigkeitsfiltergehäuse nach Anspruch 2, bei dem sich die Lasche (25;35;45;55) radial bezüglich der ersten Wand (7) und zum Äußeren des Gehäuses (1) erstreckt.

4. Flüssigkeitsfiltergehäuse nach Anspruch 3, bei dem die Lasche (25) eine Kante (28) besitzt, die zum ersten Endabschnitt (27) im wesentlichen senkrecht verläuft und an der entlang die Lasche (25) aus einem Material mit der ersten Wand (7) gefertigt ist.

5. Flüssigkeitsfiltergehäuse nach Anspruch 3, bei dem die Lasche (35) einen zweiten Endabschnitt (36) aufweist, der zum ersten Endabschnitt (37) entgegengesetzt ist und der fest verbunden mit dem Bund (20) montiert ist, und der Bund (20) eine Aufnahme (30) aufweist, die im wesentlichen U-Form hat, die sich in Richtung der ebenen Fläche (21) öffnet und zwei Fußabschnitte (31, 32) und einen Kopfabschnitt (33) besitzt, wobei der zweite Endabschnitt (36) der Lasche (35) mit dem Kopfabschnitt (33) aus einem Material ist.

6. Flüssigkeitsfiltergehäuse nach Anspruch 3, bei dem die Lasche (45;55) durch Klipsbefestigung an der ersten Wand (7) angebracht ist.

7. Flüssigkeitsfiltergehäuse nach Anspruch 2, bei dem sich die Lasche (65) zum Bund (20) im wesentlichen parallel erstreckt und in der Dicke dieses Bundes (20) vorgesehen ist.

8. Flüssigkeitsfiltergehäuse nach Anspruch 7, bei dem der freie Endabschnitt (67) der Lasche (65) Längsform im wesentlichen in konkaver Gestalt hat, deren Austiefung in eine Richtung gedreht ist, die zum Endabschnitt (13) der ersten Wand (7) entgegengesetzt liegt.

9. Flüssigkeitsfiltergehäuse nach einem der Ansprüche 2 bis 8, bei der die ebene Fläche (21) eine Erhebung (60) aufweist, die in Richtung des Bundes (20) vorspringt, wobei sich die Erhebung (60) beim Schrauben der Kappe (3) an den Sockel (2) bezüglich der Verschiebungsrichtung der Lasche (25;35;45;55;65) vor der Aussparung (22) befindet.

10. Flüssigkeitsfiltergehäuse nach einem der Ansprüche 2 bis 9, bei dem die ebene Fläche (21) und die erste Wand (7) jeweils einen Anschlag (64) aufweisen, wobei sich die zwei Anschläge in der vorbestimmten Position der Kappe (3) bezüglich des Sockels (2) berühren.

## Claims

1. Liquid filter housing for an internal combustion engine comprising:
- a seating (2) provided with a base (10) from which an annular wall (6) extends, itself provided with a free end (8),
- a cap (3) provided with a head (15) from which an annular wall (7) extends which possesses a free end (13) and which is complementary to the annular wall (6) of the seating (2) so as to delimit therewith a hollow inner volume (4) designed to receive a filtering element (5) interposed between a liquid inlet (11) and a liquid outlet (12), the cap (3) being fixed in a detachable manner to the seating (2) by screwing so as to permit mounting and demounting by rotating the said cap (3) about an axis of rotation (X-X), removal of the cap (3) enabling the filter element (5) to be replaced,
- one (7) of the annular walls (6,7) of the seating (2) and the cap (3) being called the first wall and the other (6) of the annular walls (6,7) being called the second wall, the first (7) and the second (6) annular walls having complementary screw threads (16) for screwing the cap onto the seating, the first wall (7) possessing a radial collar (20) and the free end (8) of the second wall (6) ending in a flat face (21), the collar (20) being, after the cap (3) is screwed onto the seating (2), butted up onto the flat face (21) when the cap occupies a relatively predetermined position with respect to the seating, **characterized in that** the flat face (21) includes a recess (22) and the first wall (7) includes clipping means (23) which fit into the recess (22) when the predetermined position of the cap (3) on the seating (2) is attained, and **in that** the position of the clipping means (23) is indexed with respect to the screw thread (16) of the first wall (7) so that the clipping means (23) fit into the recess (22) when the predetermined position of the cap (3) is attained.

2. Liquid filter housing according to claim 1, wherein the clipping means (23) includes an elastic tongue (25;35;45;55;65) of which a first end (27;37;67) is free and is elastically stressed so as to fit into the recess (22).

3. Liquid filter housing according to claim 2, wherein the tongue (25;35;45;55) extends radially with respect to the first wall (7) and outside the housing (1).

4. Liquid filter housing according to claim 3, wherein the tongue (25) possesses an edge (28) substantially perpendicular to the first end (27) and along which the tongue (25) is made in one piece with the first wall (7).

5. Liquid filter housing according to claim 3, wherein the tongue (35) has a second end (36) opposite the first end (37) and which is mounted securely to the collar (20), and the collar (20) includes a housing (30) having substantially a "U" shape emerging in the direction of the flat surface (21) and which possess two lugs (31,32) and a head (33), the second end (36) of the tongue (35) being made in one piece with the head (33).

6. Liquid filter housing according to claim 3, wherein the tongue (45;55) is connected by clipping onto the first wall (7).

7. Liquid filter housing according to claim 2, wherein the tongue (65) extends substantially parallel to the collar (20) and is provided within the thickness of this collar (20).

8. Liquid filter housing according to claim 7, wherein the free end (67) of the tongue (65) has a longitudinal shape with a substantially concave shape, of which the concavity is turned in the direction opposite to the end (13) of the first wall (7).

9. Liquid filter housing according to any one of claims 2 to 8, wherein the flat surface (21) includes a raised portion (60) projecting in the direction of the collar (20), the raised portion (60) being situated upstream from the recess (22) with respect to the direction of movement of the tongue (25;35;45;55;65) when the cap (3) is screwed onto the seating (2).

10. Liquid filter housing according to any one of claims 2 to 9, wherein the flat surface (21) and the first wall (7) each includes a stop (64), the two stops being in contact in the predetermined position of the cap (3) with respect to the seating (2).
